# EUROPÄISCHE PATENTSCHRIFT

(11) **EP 3 658 789 B1**
(45) Veröffentlichungstag und Bekanntmachung des Hinweises auf die Patenterteilung: **11.08.2021**
(21) Anmeldenummer: 18737228.9
(22) Anmeldetag: 02.07.2018
(51) Int. Cl.: F16B 33/00, F16B 37/04, F16B 43/02

(54) **MONTAGESCHIENE MIT EINEM BEFESTIGUNGSELEMENT**
MOUNTING RAIL HAVING A FASTENING ELEMENT
RAIL DE MONTAGE MUNI D'UN ÉLÉMENT DE FIXATION

(30) Priorität: 26.07.2017 DE 102017116856
(43) Veröffentlichungstag der Anmeldung: 03.06.2020
(73) Patentinhaber: fischerwerke GmbH & Co. KG, 72178 Waldachtal (DE)
(72) Erfinder: FÖRMER, Thomas, 72401 Haigerloch-Gruol (DE)
(86) Internationale Anmeldenummer: PCT/EP2018/067731
(87) Internationale Veröffentlichungsnummer: WO 2019/020319

(56) Entgegenhaltungen:
- EP-A1- 1 039 154
- EP-A1- 1 479 842
- EP-A2- 0 702 160
- FR-A- 1 496 236

## Beschreibung

Die Erfindung betrifft eine Montageschiene mit einem Befestigungselement mit den Merkmalen des Oberbegriffs des Anspruchs 1.

Montageschienen werden typischerweise an Decken, Wänden oder Pfosten befestigt und dienen zur Befestigung von beispielsweise Rohrschellen, Kabelschellen, Kabelpritschen, gelegentlich auch Laufstegen, abgehängt unter einer Decke oder an Wänden oder Pfosten. Die Befestigung erfolgt vielfach mit Hammerkopfschrauben oder Rechteckmuttern, die so in die Montageschienen eingebracht werden, dass ein Schraubenschaft oder eine Gewindestange zu einer Befestigung beispielsweise einer Rohrschelle aus der Montageschiene vorsteht.

Die europäische Patentanmeldung EP 1 479 842 A1 offenbart eine Montageschiene mit einem rechteckigen Rohrquerschnitt, die in Längsrichtung der Montageschiene verlaufende Sicken in Quermitten ihrer vier Seiten aufweist. Die Sicken sind im Querschnitt rechteckige Vertiefungen um ungefähr eine Wanddicke der Montageschiene. In den Sicken bzw. in den Quermitten ihrer vier Seiten weist die bekannte Montageschiene Löcher als Montageöffnungen zum Durchstecken von Schlossschrauben auf. Mit den Schlossschrauben lassen sich beispielsweise Montagewinkel an der Montageschiene befestigen, wobei ein Schenkel der Montagewinkel in der Sicke einliegt und dadurch drehfest gehalten ist. Der Schenkel des Montagewinkels ist dicker als die Sicke tief ist und steht über eine Außenfläche der Montageschiene über.

Aufgabe der Erfindung ist, eine Montageschiene mit einem Befestigungselement vorzuschlagen, das eine Anlage an einer Außenfläche der Montageschiene ermöglicht.

Diese Aufgabe wird erfindungsgemäß durch die Merkmale des Anspruchs 1 gelöst. Die erfindungsgemäße Montageschiene ist in Längsrichtung lang gestreckt und weist eine Montageöffnung in einer Längsseite auf, die länger als breit ist. Mit "Längsseite" ist hier allgemein eine in Längsrichtung verlaufende Wand bezeichnet. Vorzugsweise weist die Montageschiene mehrere in Längsrichtung zueinander versetzte, beispielsweise in bestimmten, eventuell auch sich ändernden Abständen angebrachte Montageöffnungen in einer, vorzugsweise in mehreren und insbesondere in allen Längsseiten auf. Nicht zwingend, jedoch bevorzugt, befinden sich die Montageöffnungen in Quermitten der Längsseiten. Zusätzliche oder auch ausschließlich außermittige Montageöffnungen sind möglich. Die Montageöffnungen sind beispielsweise rechteckige oder ovale Langlöcher. Die Montageöffnungen können längs, quer oder schräg zur Montageschiene ausgerichtet sein.

Die Montageöffnung ist von einer Vertiefung in einer Außenseite der Längsseite der Montageschiene umgeben. Die Vertiefung in der Außenseite kann eine Erhöhung an einer Innenseite der Längsseite, also im Innern der Montageschiene, bedeuten. Die Vertiefung ist insbesondere eine in Längsrichtung der Montageschiene durchgehende Sicke, vorzugsweise in einer Quermitte der Längsseite der Montageschiene. Allerdings sind auch andere, die Montageöffnung umgebende Vertiefungen möglich, beispielsweise in der Form einer maßstäblichen oder nicht maßstäblichen Vergrößerung der Montageöffnung. Vorzugsweise, allerdings nicht zwingend, befindet sich die Montageöffnung mittig in der Vertiefung.

Erfindungsgemäß weist die Montageschiene ein Befestigungselement mit einem Kopf auf, der länger als breit und der länger als die Montageöffnung breit ist, so dass der Kopf des Befestigungselements von außen durch die Montageöffnung in die Montageschiene eingebracht und in der Montageschiene quer oder schräg zur Montageöffnung gestellt werden kann, so dass er die Montageschiene hintergreift Die Montageschiene bildet zusammen mit dem Befestigungselement eine Befestigungsanordnung. Der Kopf des Befestigungselements ist beispielsweise ein Hammerkopf einer Hammerkopfschraube, eine Rechteckmutter oder eine parallelogrammförmige Mutter. In der Montageschiene quer oder schräg zur Montageöffnung gestellt, liegt der Kopf des Befestigungselements wie ein Widerlager innen an gegenüberliegenden Längsrändern der Montageöffnung an der Längsseite der Montageschiene an, wenn er beispielsweise an einem die Montageöffnung durchgreifenden Schraubenschaft oder einer in die Mutter geschraubten und die Montageöffnung durchgreifenden Gewindestange nach außen gespannt wird.

Außerdem weist das Befestigungselement ein Widerlager auf, das zu einer Anlage an einer Außenseite der Längsseite der Montageschiene vorgesehen ist. Das Widerlager ist länger als die Montageöffnung der Montageschiene breit ist, vorzugsweise ist es länger und zudem breiter als die Montageöffnung der Montageschiene breit ist. Das Widerlager kann auch länger und ggf. auch breiter sein als die Montageöffnung der Montageschiene lang ist. Das Widerlager ist nicht länger und nicht breiter als die die Montageöffnung umgebende Vertiefung in der Außenseite der Montageschiene, so dass das Widerlager in der Vertiefung versenkbar ist. Erfindungsgemäß ist das Widerlager nicht dicker als, insbesondere gleich dick wie die Vertiefung in der Außenseite der Montageschiene tief ist, so dass das Widerlager des Befestigungselements voll in der Vertiefung in der Außenseite der Montageschiene versenkbar ist. Mit "voll versenkbar" ist gemeint, dass das Widerlager nicht aus der Vertiefung der Montageschiene über eine Außenfläche seitlich der Vertiefung der Montageschiene übersteht, sondern bündig oder vertieft zur Außenfläche der Montageschiene ist, wenn das Widerlager des Befestigungselements in der Vertiefung der Montageschiene versenkt angeordnet ist. Das ermöglicht eine Befestigung eines Gegenstands außen an einer Längsseite der Montageschiene mit dem Befestigungselement, so dass der Gegenstand an der Außenfläche der Montageschiene neben bzw. außerhalb der Vertiefung anliegt, wobei sich das Widerlager des Befestigungselements in der Vertiefung der Montageschiene, das heißt zwischen dem außen an der Montageschiene befestigten und an der Außenfläche der Montageschiene anliegenden Gegenstand und einem Grund der Vertiefung der Montageschiene befindet.

Zu einer Verdrehsicherung und Verschiebesicherung des Kopfes des Befestigungselements sieht eine Ausgestaltung der Erfindung eine Ausnehmung in einer Längsseite der Montageöffnung der Montageschiene und einen korrespondierenden Vorsprung am Kopf des Befestigungselements vor. Die Ausnehmung in der Längsseite der Montageöffnung kann beispielsweise eine halbrunde, dreieckige oder rechteckige Kerbe und der Vorsprung des Kopfes des Befestigungselements eine Nase beispielsweise an einer Unterseite des Kopfes sein. Der Vorsprung des Kopfes des Befestigungselements und die Ausnehmung in der Längsseite der Montageöffnung der Montageschiene können in Ansicht eine gleiche oder ähnliche Form oder verschiedene Formen aufweisen. Zur Verdrehsicherung und Verschiebesicherung ist lediglich ein Eingriff des Vorsprungs des Kopfes des Befestigungselements in der Ausnehmung in der Längsseite der Montageöffnung der Montageschiene notwendig.

Eine Ausgestaltung der Erfindung sieht eine Lochscheibe aus Metall als Widerlager oder als Teil des Widerlagers vor. Das Widerlager weist beispielsweise eine herkömmliche Unterlegscheibe auf.

Eine Ausgestaltung der Erfindung sieht ein Kunststoffteil, insbesondere ein plattenförmiges Kunststoffteil mit einem Loch als Widerlager oder als Teil des Widerlagers vor. Das Kunststoffteil weist ein Eingriffselement auf, das das Widerlager verdrehsicher an der Montageschiene hält, wenn es in die Montageöffnung der Montageschiene eingreift.

Eine Weiterbildung der Erfindung sieht vor, dass die Lochscheibe aus Metall in einem Loch eines plattenförmigen, die Lochscheibe aus Metall umschließenden Kunststoffteils aufgenommen ist. Das Kunststoffteil lässt sich zusammendrücken und kann deswegen im ursprünglichen Zustand dicker sein als die die Montageöffnung der Montageschiene umgebende Vertiefung tief ist. Sie lässt sich dadurch klapperfrei in der Vertiefung festlegen mit einem Gegenstand, der außerhalb der Vertiefung an einer Außenfläche der Montageschiene anliegt. Die Lochscheibe aus Metall ist nicht dicker als die die Montageöffnung der Montageschiene umgebende Vertiefung tief ist, und bietet eine stabile Anlage für einen Gegenstand, der außen an der Montageschiene befestigt ist oder wird und der beispielsweise nicht größer als die Vertiefung ist.

Vorzugsweise ist die Montageschiene ein in Umfangsrichtung geschlossenes Rohr ohne durchgehenden Längsschlitz. Ein geschlossenes Rohr ist aufgrund seiner Form biegesteif und torsionssteif. Das Rohr weist vorzugsweise einen quadratischen oder rechteckigen Querschnitt auf. Andere, regelmäßige oder unregelmäßige Mehrkante, beispielsweise ein sechs- oder achteckiges Rohr, sind möglich und auch ein rundes- bzw. ovales Rohr sind nicht ausgeschlossen.

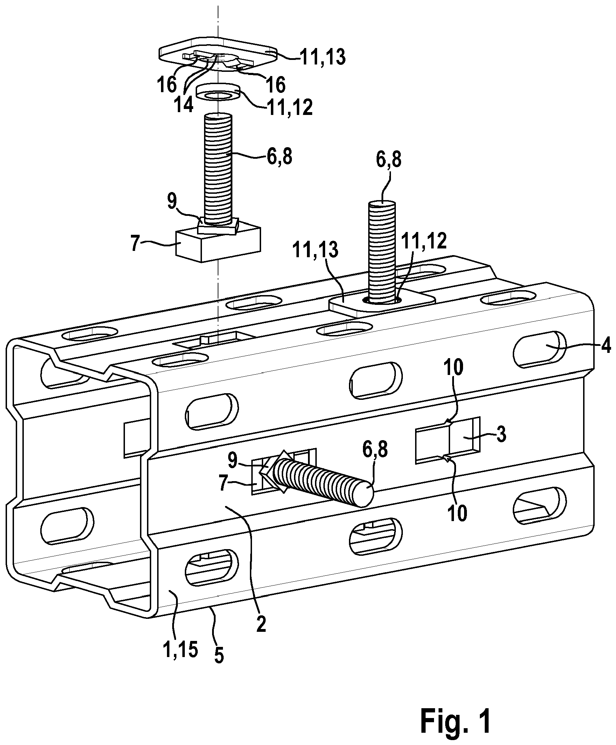

Die Erfindung wird nachfolgend anhand eines in der Zeichnung dargestellten Ausführungsbeispiels näher erläutert. Die einzige Figur zeigt eine Montageschiene mit einem Befestigungselement gemäß der Erfindung in perspektivischer Explosionsdarstellung.

Die in der Zeichnung dargestellte, erfindungsgemäße Montageschiene 1 ist ein Stahlrohr mit rechteckigem oder im Ausführungsbeispiel quadratischem Querschnitt, das keinen in Längsrichtung durchgehenden Schlitz aufweist. Die Montageschiene 1 erstreckt sich in Längsrichtung und sie ist in Längsrichtung offen. Andere Metalle oder auch ein nichtmetallischer Werkstoff wie Kunststoff sind möglich. In Quermitten aller Längsseiten weist die Montageschiene 1 Vertiefungen 2 in Form von in Längsrichtung durchgehenden Sicken auf. Im Ausführungsbeispiel weisen die Vertiefungen 2 trapezförmige Querschnitte auf und sind etwas tiefer als eine Wanddicke der Montageschiene 1. Außerdem weist die Montageschiene 1 Montageöffnungen 3 in den Quermitten ihrer Längsseiten und damit in den Vertiefungen 2 auf, die im Ausführungsbeispiel als rechteckige Langlöcher ausgeführt sind. Die Vertiefungen 2 umgeben also die Montageöffnungen 3. Allgemein ausgedrückt sind die Montageöffnungen 3 in Längsrichtung länger als quer zur Längsrichtung breit. Im Ausführungsbeispiel sind die Montageöffnungen 3 in Längsrichtung der Montageschiene 1 ausgerichtet, sie können allerdings auch schräg oder quer zur Montageschiene 1 ausgerichtet sein (nicht dargestellt).

Außer den Montageöffnungen 3 in den Vertiefungen 2 weist die Montageschiene 1 Langlöcher 4 seitlich außerhalb der Vertiefungen 2 auf, die ebenfalls als Montageöffnungen aufgefasst werden können. Zur Unterscheidung werden die Langlöcher in den Vertiefungen 2 als Montageöffnungen 3 und die Langlöcher außerhalb der Vertiefungen 2 als Langlöcher 4 bezeichnet. Die Langlöcher 4 sind im Ausführungsbeispiel oval und zwischen den Vertiefungen 2 und Längskanten 5 der Montageschiene 1 angebracht. Es ist nicht notwendig, dass die Montageschiene 1 in allen Längsseiten Vertiefungen 2, Montageöffnungen 3 und/oder Langlöcher 4 aufweist.

Als Befestigungselement 6 weist die Montageschiene 1 erfindungsgemäß eine Hammerkopfschraube mit einem im Ausführungsbeispiel rechteckigen Schraubenkopf 7 auf, der etwas kürzer und etwas schmaler als die Montageöffnungen 3 ist, so dass er in Längsrichtung einer Montageöffnung 3 ausgerichtet von außen durch die Montageöffnung 3 in die Montageschiene 1 eingebracht werden kann. Der Schraubenkopf 7 des Befestigungselements 6 ist länger als die Montageöffnungen 3 der Montageschiene 1 breit sind, so dass der Schraubenkopf 7 die Montageschiene 1 hintergreift, wenn er in der Montageschiene 1 schräg oder quer gestellt wird. Ein Schraubenschaft 8 durchgreift die Montageöffnung 3, so dass an ihm ein nicht gezeichneter Gegenstand befestigt werden kann. Anstelle der gezeichneten Hammerkopfschraube kann das Befestigungselement 6 eine rechteckige oder beispielsweise auch parallelogrammförmige Mutter aufweisen, in die eine Gewindestange geschraubt ist (nicht dargestellt).

An einer Unterseite an einem Übergang in den Schraubenschaft 8 weist der Schraubenkopf 7 der das oder einen Teil des Befestigungselements 6 bildenden Hammerkopfschraube einen mehreckigen Kragen auf, der von der Unterseite des Schraubenkopfs 7 absteht und den Schraubenschaft 8 umgibt. Der Kragen bildet einen Vorsprung 9 des Befestigungselements 6 zu einer Verdrehsicherung des Befestigungselements 6 an der Montageschiene 1 und zu einer Verschiebesicherung in der Längsrichtung der Montageöffnung 3. In einer Längsmitte ihrer Längsränder weist die Montageöffnung 3 dreiecksförmige Ausnehmungen 10 korrespondierend zu dem den Vorsprung 9 bildenden Kragen an der Unterseite des Schraubenkopfs 7 des Befestigungselements 6 auf: Ist der Schraubenkopf 7, wie in der Figur vorn zu sehen, in der Montageschiene 1 quer zur Montageöffnung 3 gestellt und liegt von innen an den Längsrändern der Montageöffnung 3 in der Montageschiene 1 an, liegt der Vorsprung 9 an der Unterseite des Schraubenkopfs 7 in den Ausnehmungen 10 in den Längsmitten der Längsränder der Montageöffnung 3 ein. Der in den Ausnehmungen 10 in den Längsmitten der Längsränder der Montageöffnung 3 einliegende Vorsprung 9 an der Unterseite des Schraubenkopfs 7 hält das Befestigungselement 6 verdrehsicher und verschiebesicher in der Montageöffnung 3 und in bzw. an der Montageschiene 1.

Von außen ist bzw. wird ein Widerlager 11 auf den Schraubenschaft 8 des Befestigungselements 6 aufgesetzt. Ein solches Widerlager 11 ist in der Figur vorn oben als Einzelteil und hinten oben auf den Schraubenschaft 8 und versenkt in die die Vertiefung 2 der Montageschiene 1 bildende Sicke gezeichnet. Im Ausführungsbeispiel ist das Widerlager 11 lochscheibenförmig und aus einer Lochscheibe 12 aus Metall (Unterlegscheibe) und einem Kunststoffteil 13 zusammengesetzt. Die Lochscheibe 12 des Widerlagers 11 ist dünner als die Vertiefung 2 der Montageschiene 1 tief ist. Das Kunststoffteil 13 des Widerlagers 11 weist die Form einer Platte mit einem Mittelloch auf, in dem die Lochscheibe 12 eingeschnappt ist. Zum Einschnappen der Lochscheibe 12 weist das Kunststoffteil 13 nach innen stehende Lippen 14 an seinem Mittelloch auf, zwischen denen die Lochscheibe 12 eingeschnappt ist. Das Kunststoffteil 13 des Widerlagers 11 ist näherungsweise rechteckig, wobei Längsseiten an ihren Enden mit Rundungen nach innen bis zu Querseiten verlaufen. Das Kunststoffteil 13 und damit das Widerlager 11 ist etwas schmaler und kürzer als die als in Längsrichtung durchgehende Sicke ausgeführte, die Montageöffnungen 3 umgebende Vertiefung 2 der Montageschiene 1, so dass das Widerlager 11 in die Vertiefung 2 der Montageschiene 1 versenkbar ist. Im Ausführungsbeispiel ist das Kunststoffteil 13 des Widerlagers 11 nicht dicker als die Vertiefung 2 der Montageschiene 1 tief ist, so dass das Kunststoffteil 13 und damit das Widerlager 11 insgesamt nicht nach außen über Außenflächen 15 der Montageschiene 1 seitlich neben der Vertiefung 2 übersteht. Weil der Kunststoff des Kunststoffteils 13 verformbar ist, ist auch eine dickere Ausführung des Kunststoffteils 13 des Widerlagers 11 möglich.

Ein nicht gezeichneter Gegenstand, der mit dem Befestigungselement 6 von außen gegen eine der Längsseiten der Montageschiene 1 gespannt wird und der seitlich über die Vertiefung 2 übersteht, liegt seitlich neben der Vertiefung 2 an den Außenflächen 15 der Montageschiene 1 an. Sofern das Kunststoffteil 13 des Widerlagers 11 dicker als die Vertiefung 2 der Montageschiene 1 tief ist, drückt ein solcher, von außen gegen die Montageschiene 1 gespannter Gegenstand das Kunststoffteil 13 des Widerlagers 11 auf die Tiefe der Vertiefung 2 zusammen und klemmt es und damit das Widerlager 11 in der Vertiefung 2 der Montageschiene 1 fest.

Wird ein nicht gezeichneter Gegenstand, der nicht breiter als die Vertiefung 2 der Montageschiene 1 ist, mit dem Befestigungselement 6 von außen gegen die Montageschiene 1 gespannt, stützt er sich an der Lochscheibe 12 des Widerlagers 11 ab und hat an der aus Metall bestehenden Lochscheibe 12 einen guten Halt. Ein solcher Gegenstand kann beispielsweise eine auf den Schraubenschaft 7 des Befestigungselements 6 geschraubte Mutter sein, die zu einer Festlegung des Befestigungselements 6 an der Montageschiene 1 dient.

Auf einer Flachseite weist das Kunststoffteil 13 des Widerlagers 11 Erhebungen als Eingriffselemente 16 auf, die einander gegenüberliegend an Rändern des Lochs des Kunststoffteils 13 angeordnet sind, in dem die Lochscheibe 12 aus Metall aufgenommen ist. Ist das Widerlager 11 des Befestigungselements 6 in der Vertiefung 2 der Montageschiene 1 versenkt, greifen die Eingriffselemente 16 in die Montageöffnung 3 ein, wodurch das Widerlager 11 drehfest und verschiebefest an der Montageschiene 1 gehalten ist. Über das Widerlager 11 ist auch das Befestigungselements 6 verschiebefest an der Montageschiene 1 gehalten.

### Bezuqszeichenliste

### Montageschiene mit einem Befestigungselement

- 1: Montageschiene
- 2: Vertiefung
- 3: Montageöffnung
- 4: Langloch
- 5: Längskante
- 6: Befestigungselement
- 7: Schraubenkopf
- 8: Schraubenschaft
- 9: Vorsprung
- 10: Ausnehmung
- 11: Widerlager
- 12: Lochscheibe
- 13: Kunststoffteil
- 14: Lippe
- 15: Außenfläche
- 16: Eingriffselement

## Patentansprüche

1. Montageschiene (1) mit einem Befestigungselement (6), wobei die Montageschiene (1) eine Montageöffnung (3) in einer Längsseite, die länger als breit ist, und eine die Montageöffnung (3) umgebende Vertiefung (2) in einer Außenseite aufweist, und wobei das Befestigungselement (6) einen Kopf (7), der länger als breit ist und der länger als die Montageöffnung (3) der Montageschiene (1) breit ist, so dass der Kopf (7) des Befestigungselements (6) durch die Montageöffnung (3) in die Montageschiene (1) verbracht werden kann, und ein Widerlager (11) zu einer Anlage außen an der Montageschiene (1), das länger als die Montageöffnung (3) breit, aber nicht länger und nicht breiter als die Vertiefung (2) der Montageschiene (1) lang und breit ist, so dass das Widerlager (11) des Befestigungselements (6) in der die Montageöffnung (3) umgebenden Vertiefung (2) der Montageschiene (1) versenkbar ist, aufweist, **dadurch gekennzeichnet, dass** das Widerlager (11) nicht dicker als die Vertiefung (2) der Montageschiene (1) tief ist, so dass das Widerlager (11) des Befestigungselements (6) bündig mit oder versenkt gegenüber einer die Vertiefung (2) umgebenden Außenfläche (15) der Montageschiene (1) in der die Montageöffnung (3) umgebenden Vertiefung (2) der Montageschiene (1) versenkbar ist.

2. Montageschiene nach Anspruch 1, **dadurch gekennzeichnet, dass** das Widerlager (11) länger und/oder breiter als die Montageöffnung (3) ist.

3. Montageschiene nach Anspruch 1 oder 2, **dadurch gekennzeichnet, dass** die Vertiefung (2) eine Sicke ist.

4. Montageschiene nach einem der Ansprüche 1 bis 3, **dadurch gekennzeichnet, dass** sich die Montageöffnung (3) und die Vertiefung (2) in einer Quermitte der Längsseite der Montageschiene (1) befinden.

5. Montageschiene nach einem der vorhergehenden Ansprüche, **dadurch gekennzeichnet, dass** eine Längsseite der Montageöffnung (3) der Montageschiene (1) eine Ausnehmung (10) und der Kopf (7) des Befestigungselements (6) einen korrespondierenden Vorsprung (9) zu einer Verdrehsicherung und Verschiebesicherung des Kopfs (7) des Befestigungselements (6) in der Montageschiene (1) durch Eingriff des Vorsprungs (9) des Kopfs (7) des Befestigungselements (6) in der Ausnehmung (10) der Montageschiene (1) aufweist.

6. Montageschiene nach einem der vorhergehenden Ansprüche, **dadurch gekennzeichnet, dass** das Widerlager (11) eine Lochscheibe (12) aus Metall aufweist.

7. Montageschiene nach einem der vorhergehenden Ansprüche, **dadurch gekennzeichnet, dass** das Widerlager (11) ein Kunststoffteil (13) mit einem Eingriffselement (16) für die Montagöffnung (3) der Montageschiene (1) zu einer Verdrehsicherung des Widerlagers (11) des Befestigungselements (6) an der Montageschiene (1) aufweist.

8. Montageschiene nach Anspruch 6 und 7 **dadurch gekennzeichnet, dass** das Kunststoffteil (13) eine die Lochscheibe (12) aus Metall umschließende Platte mit einem Loch ist, in dem die Lochscheibe (12) aufgenommen ist.

9. Montageschiene nach einem der vorhergehenden Ansprüche, **dadurch gekennzeichnet, dass** die Montageschiene (1) ein Rohr ist.

10. Montageschiene nach einem der vorhergehenden Ansprüche, **dadurch gekennzeichnet, dass** die Montageöffnung (3) ein Langloch ist.

## Claims

1. Mounting rail (1) with a fixing element (6), wherein the mounting rail (1) has, in a longitudinal side, a mounting opening (3) which is longer than it is wide and, in an outer side, an indentation (2) which surrounds the mounting opening (3), and wherein the fixing element (6) has a head (7) which is longer than it is wide and which is longer than the mounting opening (3) of the mounting rail (1) is wide, so that the head (7) of the fixing element (6) can be introduced through the mounting opening (3) into the mounting rail (1), and a counter-bearing (11) for bearing externally against the mounting rail (1), which counterbearing is longer than the mounting opening (3) is wide but not longer and not wider than the indentation (2) of the mounting rail (1) is long and wide, so that the counter-bearing (11) of the fixing element (6) is countersinkable in the indentation (2) of the mounting rail (1) surrounding the mounting opening (3), **characterised in that** the counter-bearing (11) is not thicker than the indentation (2) of the mounting rail (1) is deep, so that the counter-bearing (11) of the fixing element (6) is countersinkable in the indentation (2) of the mounting rail (1) surrounding the mounting opening (3) so as to be flush with or recessed with respect to an outer surface (15) of the mounting rail (1) surrounding the indentation (2) .

2. Mounting rail according to claim 1, **characterised in that** the counter-bearing (11) is longer and/or wider than the mounting opening (3).

3. Mounting rail according to claim 1 or 2, **characterised in that** the indentation (2) is a corrugation.

4. Mounting rail according to any one of claims 1 to 3, **characterised in that** the mounting opening (3) and the indentation (2) are located in a transverse centre of the longitudinal side of the mounting rail (1).

5. Mounting rail according to any one of the preceding claims, **characterised in that** a longitudinal side of the mounting opening (3) of the mounting rail (1) has a cut-out (10), and the head (7) of the fixing element (6) has a complementary projection (9) for securing the head (7) of the fixing element (6) against rotation and against displacement in the mounting rail (1) by engagement of the projection (9) on the head (7) of the fixing element (6) in the cut-out (10) of the mounting rail (1).

6. Mounting rail according to any one of the preceding claims, **characterised in that** the counter-bearing (11) has an apertured disc (12) made of metal.

7. Mounting rail according to any one of the preceding claims, **characterised in that** the counter-bearing (11) has a plastics part (13) having an engagement element (16) for the mounting opening (3) of the mounting rail (1) for the purpose of securing the counter-bearing (11) of the fixing element (6) against rotation on the mounting rail (1).

8. Mounting rail according to claim 6 and 7, **characterised in that** the plastics part (13) is a plate which encompasses the apertured metal disc (12) and has a hole in which the apertured disc (12) is accommodated.

9. Mounting rail according to any one of the preceding claims, **characterised in that** the mounting rail (1) is a tube.

10. Mounting rail according to any one of the preceding claims, **characterised in that** the mounting opening (3) is an oblong hole.

## Revendications

1. Rail de montage (1) muni d'un élément de fixation (6), ledit rail de montage (1) présentant, dans un côté longitudinal, un orifice de montage (3) dont la longueur excède la largeur et, dans un côté extérieur, un renfoncement (2) qui entoure l'orifice de montage (3), ledit élément de fixation (6) comprenant une tête (7) dont la longueur excède la largeur et dont la longueur est supérieure à la largeur dudit orifice de montage (3) du rail de montage (1), de telle sorte que ladite tête (7) de l'élément de fixation (6) puisse être insérée dans ledit rail de montage (1) à travers ledit orifice de montage (3), et une contre-butée (11) qui est conçue pour venir extérieurement en applique contre ledit rail de montage (1) et dont la longueur est supérieure à la largeur de l'orifice de montage (3), mais dont la longueur et la largeur ne sont pas supérieures à la longueur et à la largeur du renfoncement (2) dudit rail de montage (1), de façon telle que ladite contre-butée (11) de l'élément de fixation (6) puisse être encaissée dans ledit renfoncement (2) du rail de montage (1) qui entoure l'orifice de montage (3), **caractérisé par le fait que** l'épaisseur de la contre-butée (11) n'est pas supérieure à la profondeur du renfoncement (2) du rail de montage (1), de telle manière que ladite contre-butée (11) de l'élément de fixation (6) puisse être encaissée dans le renfoncement (2) du rail de montage (1) entourant l'orifice de montage (3), dans l'affleurement d'une surface extérieure (15) dudit rail de montage (1) qui entoure ledit renfoncement (2), ou avec encaissement par rapport à ladite surface.

2. Rail de montage selon la revendication 1, **caractérisé par le fait que** la contre-butée (11) est plus longue et/ou plus large que l'orifice de montage (3).

3. Rail de montage selon la revendication 1 ou 2, **caractérisé par le fait que** le renfoncement (2) est une moulure.

4. Rail de montage selon l'une des revendications 1 à 3, **caractérisé par le fait que** l'orifice de montage (3) et le renfoncement (2) sont situés, dans le sens transversal, au centre du côté longitudinal dudit rail de montage (1).

5. Rail de montage selon l'une des revendications précédentes, **caractérisé par le fait qu'**un côté longitudinal de l'orifice de montage (3) dudit rail de montage (1) est muni d'un évidement (10) et la tête (7) de l'élément de fixation (6) est dotée d'une protubérance (9) concordante, en vue d'interdire une rotation et un coulissement de ladite tête (7) de l'élément de fixation (6), dans ledit rail de montage (1), par venue en prise de ladite protubérance (9) de la tête (7) de l'élément de fixation (6) dans ledit évidement (10) dudit rail de montage (1).

6. Rail de montage selon l'une des revendications précédentes, **caractérisé par le fait que** la contre-butée (11) est pourvue d'un disque perforé (12) en métal.

7. Rail de montage selon l'une des revendications précédentes, **caractérisé par le fait que** la contre-butée (11) comporte une pièce (13) en matière plastique, munie d'un élément de pénétration (16) dédié à l'orifice de montage (3) dudit rail de montage (1), en vue d'interdire une rotation de ladite contre-butée (11) de l'élément de fixation (6) sur ledit rail de montage (1).

8. Rail de montage selon les revendications 6 et 7, **caractérisé par le fait que** la pièce (13) en matière plastique est une plaquette qui ceinture le disque perforé (12) en métal, et est percée d'un trou dans lequel ledit disque perforé (12) est logé.

9. Rail de montage selon l'une des revendications précédentes, **caractérisé par le fait que** ledit rail de montage (1) est un tube.

10. Rail de montage selon l'une des revendications précédentes, **caractérisé par le fait que** l'orifice de montage (3) est un trou oblong.
